(19) Europäisches Patentamt
European Patent Office
Office européen des brevets

(11) **EP 3 243 574 A1**

(12) **EUROPÄISCHE PATENTANMELDUNG**

(43) Veröffentlichungstag:
   **15.11.2017 Patentblatt 2017/46**

(21) Anmeldenummer: **17169088.6**

(22) Anmeldetag: **02.05.2017**

(51) Int Cl.:
   **B07B 1/00** (2006.01)     **B07C 1/00** (2006.01)
   **B03B 9/06** (2006.01)     **B09B 3/00** (2006.01)
   **B09B 5/00** (2006.01)     **C22B 7/00** (2006.01)
   **C22B 21/00** (2006.01)

(84) Benannte Vertragsstaaten:
   **AL AT BE BG CH CY CZ DE DK EE ES FI FR GB GR HR HU IE IS IT LI LT LU LV MC MK MT NL NO PL PT RO RS SE SI SK SM TR**
   Benannte Erstreckungsstaaten:
   **BA ME**
   Benannte Validierungsstaaten:
   **MA MD**

(30) Priorität: **02.05.2016 DE 102016108110**

(71) Anmelder: **Hydro Aluminium Rolled Products GmbH**
   **41515 Grevenbroich (DE)**

(72) Erfinder:
   • **BRÖßNER, Thomas**
   **41812 Erkelenz (DE)**

   • **GILLNER, Ronald**
   **53913 Swisttal (DE)**
   • **HEIDEMEYER, Thomas**
   **40668 Meerbusch (DE)**
   • **JENAL, Michael**
   **53501 Grafschaft (DE)**
   • **MÜLLER, Heiner**
   **50259 Pulheim (DE)**
   • **WIMMER, Michael**
   **50858 Köln (DE)**
   • **BAUERSCHLAG, Nils Robert**
   **52072 Aachen (DE)**

(74) Vertreter: **Cohausz & Florack**
   **Patent- & Rechtsanwälte**
   **Partnerschaftsgesellschaft mbB**
   **Bleichstraße 14**
   **40211 Düsseldorf (DE)**

(54) **RECYCLINGANLAGE UND RECYCLINGVERFAHREN ZUR AUFBEREITUNG VON ALUMINIUMSCHROTT**

(57) Die Erfindung betrifft eine Recyclinganlage (42) zur Aufbereitung von Aluminiumschrott, insbesondere UBC-Schrott, mit einer Zerkleinerungsanlage (44), die dazu eingerichtet ist, der Recyclinganlage (22) zugeführten Schrott zu zerkleinern, und mit einer der Zerkleinerungsanlage (44) nachgeordneten Sortieranlage (48), die dazu eingerichtet ist, den von der Zerkleinerungsanlage (44) zerkleinerten Schrott zu sortieren, wobei die Recyclinganlage (42) einen ersten Pufferspeicher (52) aufweist, der dazu eingerichtet ist, den von der Zerkleinerungsanlage (44) zerkleinerten Schrott zwischenzulagern und der Sortieranlage (48) mit einem vorgegebenen Massen- oder Volumenstrom (56) zuzuführen. Die Erfindung betrifft weiterhin ein Recyclingverfahren zur Aufbereitung von Aluminiumschrott, insbesondere UBC-Schrott, bei dem eine Menge Aluminiumschrott, insbesondere UBC-Schrott, zerkleinert wird, bei dem der zerkleinerte Aluminiumschrott in einem ersten Pufferspeicher (52) zwischengelagert wird und bei dem der Aluminiumschrott dem Pufferspeicher (52) automatisch mit einem vorgegebenen Massen- oder Volumenstrom (56) entnommen und sortiert wird.

Fig.4

**Beschreibung**

Die Erfindung betrifft eine Recyclinganlage zur Aufbereitung von Aluminiumschrott, insbesondere UBC-Schrott, mit einer Zerkleinerungsanlage, die dazu eingerichtet ist, der Recyclinganlage zugeführten Schrott zu zerkleinern, und mit einer der Zerkleinerungsanlage nachgeordneten Sortieranlage, die dazu eingerichtet ist, den von der Zerkleinerungsanlage zerkleinerten Schrott zu sortieren. Die Erfindung betrifft weiterhin ein Recyclingverfahren zur Aufbereitung von Aluminiumschrott, insbesondere UBC-Schrott.

Nach dem Stand der Technik erfolgt das Recycling von Aluminium über mehrere Verfahrensschritte. Diese umfassen in der Regel das Sammeln der unterschiedlichen Aluminiumschrotte, eine mechanische Aufbereitung mit der sich anschließenden metallurgischen Verwertung. Für das ressourceneffiziente Recycling muss die mechanische Aufbereitung ein Aluminiumschrottprodukt erzeugen, dass den qualitativen Ansprüchen des metallurgischen Verwertungsweges entspricht. Hierzu werden unterschiedliche Aufbereitungsschritte durchgeführt.

Die mechanische Aufbereitung des Schrottes erfolgt in der Regel über eine Zerkleinerung, der sich diverse Sortierschritte anschließen. Die Sortierschritte können bspw. Eisen und NE-Metall Trennung über Magnetscheider beinhalten, Windsichtung, Wirbelstromscheidung, sensorgestützte Sortierung (bspw. Röntgentransmission oder -fluoreszens, Induktion, LIBS, NIR, etc.). Die verfahrenstechnische Kombination der Sortierschritte erlaubt das Aussortieren verschiedener Verunreinigungen bzw. das Sortieren in unterschiedliche Aluminiumqualitäten. Ziel der mechanischen Aufbereitung kann es dabei sein, ein Aluminiumkonzentrat zu erzeugen, dass direkt für die metallurgische Verwertung genutzt werden kann.

Prozesstechnisch werden Zerkleinerungsanlagen in der Regel direkt (oder indirekt) mit mobilen oder stationären Aufgabeaggregaten wie Radlader, Polypgreifer, Gabelstaplern, Krananlagen etc. beschickt. Dabei nimmt das Bedienpersonal direkten Einfluss auf den Massen- bzw. Volumendurchsatz der Zerkleinerungsanlage, wobei es hierbei zu deutlichen Durchsatzschwankungen kommen kann, die kurzfristig beispielsweise das bis zu zweifache der Regeloutputmenge erreichen können.

Die der Zerkleinerung nachgeschaltete Sortierung orientiert sich in der Regel an der Durchsatzleistung der Zerkleinerung. Dabei werden in aller Regel gewisse Sicherheiten hinsichtlich des Durchsatzes berücksichtigt. Dennoch sind regelmäßig Störungen in der Sortierung oder Qualitätseinbußen im Sortierprodukt zu verzeichnen, die durch zu hohe Durchsätze in der Sortierung verursacht werden (verursacht durch schwankende Outputmengen der Zerkleinerung). Beispielsweise führen zu hohe Durchsätze zur Überlappung einzelner Schrottfragmente, so dass eine einzelkorngenaue Sortierung wie zum Beispiel mit einem Wirbelstromscheider gestört wird.

Dieses Problem tritt insbesondere beim Recycling von UBC-Schrott auf. Unter UBC (used beverage can)-Schrott wird (Aluminium-)Getränkedosenschrott verstanden, der einen großen Anteil am gesamten aufkommenden Aluminiumschrott aus dem Bereich der Verpackungen ausmacht. Es besteht daher ein großer Bedarf an einem effektiven und robusten Recyclingprozess für UBC-Schrott.

UBC-Schrott weist typischerweise verschiedenartige Verunreinigungen auf, zum Beispiel metallische Verunreinigungen aus Gussaluminium oder auch aus Nichtaluminiumlegierungen wie Kupfer- oder Eisenlegierungen. Weiterhin enthält UBC-Schrott typischerweise auch nichtmetallische Verunreinigungen wie Kunststofffolien oder mineralische Verunreinigungen. Diese Verunreinigungen müssen im Sortierprozess vor der metallurgischen Weiterverwertung aussortiert werden. Weiterhin sind die Dosen in aller Regel lackiert, so dass vor dem Einschmelzen der Dosenschrotte noch eine Entlackung erfolgt.

UBC-Schrott wird zum Transport und zur Lagerung typischerweise zu Paketen zusammengepresst. Der Kompaktierungsgrad der Pakete kann sehr unterschiedlich sein und zum Beispiel zwischen 200 und 1200 kg/m$^3$ schwanken. Dies führt bei der Zerkleinerung der Schrottpakete zu großen Durchsatzschwankungen und damit zu den zuvor beschriebenen Problemen.

Die Recyclinganlagen für UBC-Schrott bestehen typischerweise aus einer Vielzahl in Reihe geschalteter Komponenten, nämlich insbesondere einer Zerkleinerungsanlage, einer Sortieranlage mit mehreren einzelnen Sortiervorrichtungen, einer Entlackungsanlage und einem Schmelzofen. Derartige Recyclinganlagen haben daher eine hohe Gesamtausfallswahrscheinlichkeit, da bereits der Ausfall einer Komponente ausreicht, um den Betrieb der gesamten Anlage stillzulegen. Dies ist insbesondere deshalb problematisch, weil die Ausfallwahrscheinlichkeiten der einzelnen Komponenten aufgrund der hohen Durchsatzschwankungen beim UBC-Schrott besonders hoch sind, insbesondere bei der Zerkleinerungsanlage.

Es wurde versucht, den Durchsatz einer solchen Recyclinganlage für UBC-Schrott dadurch zu vergleichmäßigen, dass durch das Bedienpersonal manuell Einfluss auf die Zerkleinerung genommen, beispielsweise durch Drosselung des Durchsatzes der Zerkleinerung, um den ausgelegten maximalen Durchsatz der Zerkleinerungsanlage nicht zu überschreiten. Diese Vorgehensweise führt jedoch zu neuen Problemen auf Grund der ständigen manuellen Eingriffe in den Anlagenbetrieb sowie zu einer nicht optimalen Auslastung der Anlage.

Vor diesem Hintergrund liegt der vorliegenden Erfindung die Aufgabe zu Grunde, eine Recyclinganlage zur Aufbereitung von Aluminiumschrott und ein entsprechendes Recyclingverfahren zur Verfügung zu stellen, mit dem Aluminiumschrott, insbesondere UBC-Schrott effektiverer und zuverlässigerer aufbereitet werden kann.

Gemäß einem ersten Aspekt der vorliegenden Offenbarung wird diese Aufgabe bei einer Recyclinganlage zur Aufbereitung von Aluminiumschrott, insbesondere UBC-Schrott, mit einer Zerkleinerungsanlage, die dazu eingerichtet ist, der Recyclinganlage zugeführten Schrott zu zerkleinern, und mit einer der Zerkleinerungsanlage nachgeordneten Sortieranlage, die dazu eingerichtet ist, den von der Zerkleinerungsanlage zerkleinerten Schrott zu sortieren, erfindungsgemäß zumindest teilweise dadurch gelöst, dass die Recyclinganlage einen ersten Pufferspeicher aufweist, der dazu eingerichtet ist, den von der Zerkleinerungsanlage zerkleinerten Schrott zwischenzulagern und der Sortieranlage mit einem vorgegebenen Massen- oder Volumenstrom zuzuführen.

Auf diese Weise lassen sich die Zuverlässigkeit und der Durchsatz der Recyclinganlage erhöhen. Mit dem Pufferspeicher lassen sich sowohl Durchsatzschwankungen der Zerkleinerungsanlage, als auch zeitweise Ausfälle der Zerkleinerungsanlage kompensieren, so dass der nachfolgenden Sortierung dennoch ein gleichbleibender, vorgegebene Massen- oder Volumenstrom zugeführt werden kann, der eine effektive Sortierung sicherstellt.

Insbesondere weisen die einzelnen Anlagen einer Recyclinganlage wie die Zerkleinerungsanlage, die Sortieranlage die Entlackungsanlage bzw. der Schmelzofen, unterschiedliche Verfügbarkeiten auf, beispielsweise aufgrund unterschiedlicher Wartungszyklen. Bei einer Recyclinganlage ohne Puffer multiplizieren sich die Verfügbarkeiten der in Reihe geschalteten Anlagen, so dass sich eine recht geringe Gesamtverfügbarkeit der Recyclinganlage ergibt. Durch Pufferspeicher lässt sich die Abhängigkeit der Anlagen einer Recyclinganlage voneinander aufheben bzw. puffern, so dass die Verfügbarkeit der gesamten Anlage deutlich gesteigert wird.

Die Recyclinganlage weist eine Mehrzahl von Anlagen auf, nämlich zumindest eine Zerkleinerungsanlage und eine Sortieranlage. Diese Anlagen sind insbesondere in einer Prozessstrecke derart angeordnet, dass die Anlagen von dem Aluminiumschrott, der die Recyclinganlage durchläuft, in einer vorgegebenen Reihenfolge durchlaufen werden. Zu diesem Zweck kann die Recyclinganlage insbesondere ein Transportsystem aufweisen, das in die Recyclinganlage eingebrachten Aluminiumschrott in der vorgegebenen Reihenfolge durch die Anlagen der Recyclinganlage transportiert. Ein solches Transportsystem kann beispielsweise ein oder mehrere Transportbänder aufweisen.

Die Recyclinganlage umfasst eine Zerkleinerungsanlage, die dazu eingerichtet ist, der Recyclinganlage zugeführten Aluminiumschrott zu zerkleinern. Eine solche Zerkleinerungsanlage kann beispielsweise eine Hammermühle aufweisen, mit der Aluminiumschrott zerkleinert werden kann.

Die Recyclinganlage umfasst weiterhin eine Sortieranlage, die dazu eingerichtet ist, den von der Zerkleinerungsanlage zerkleinerten Schrott zu sortieren. Zu diesem Zweck kann die Sortieranlage insbesondere ein oder mehrere Sortiervorrichtungen aufweisen, mit denen sich verschiedene Verunreinigungsfraktionen von dem Aluminiumschrott abtrennen lassen. Beispielsweise kann die Sortieranlage einen Magnetscheider zur Aussortierung eisenhaltiger Verunreinigungen und/oder einen Wirbelstromscheider zur Aussortierung von nichtmetallischen Verunreinigungen aufweisen.

Die Sortieranlage ist der Zerkleinerungsanlage nachgeordnet. Dies bedeutet, dass die Sortieranlage in der Prozessstrecke hinter der Zerkleinerungsanlage angeordnet ist, so dass durch die Recyclinganlage geführter Aluminiumschrott erst durch die Zerkleinerungsanlage und dann durch die Sortieranlage geführt wird.

Die Sortieranlage ist vorzugsweise für eine sensorgestützte Sortierung, insbesondere LIBS-basierte Sortierung, eingerichtet. Zusätzlich oder alternativ kann die Sortieranlage beispielsweise auch für eine Röntgentransmission-basierte, eine Röntgenfluoreszens-basierte, eine Induktions-basierte und/oder eine NIR-basierte Sortierung eingerichtet sein.

LIBS steht für laserinduzierte Plasmaspektroskopie (Laser Induced Breakdown Spectroscopy). NIR steht für Nahinfrarotspektroskopie.

Die Recyclinganlage weist einen ersten Pufferspeicher auf, der dazu eingerichtet ist, den von der Zerkleinerungsanlage zerkleinerten Schrott zwischenzulagern und der Sortieranlage mit einem vorgegebenen Massen- oder Volumenstrom zuzuführen. Zu diesem Zweck weist der erste Pufferspeicher insbesondere eine Kammer auf, in der der Schrott zwischengelagert werden kann, sowie eine Entnahmevorrichtung, mit der der Schrott der Kammer kontrolliert entnommen werden kann, um den entnommenen Schrott der nachgelagerten Sortieranlage zuführen zu können. Insbesondere kann der erste Pufferspeicher eine Gewicht- oder Volumenmesseinrichtung aufweisen zur Messung des Gewichts oder des Volumens von dem Schrott, der dem ersten Pufferspeicher mit der Entnahmevorrichtung entnommen wird, und die Entnahmevorrichtung kann abhängig von dem gemessenen Wert für das Gewicht bzw. für das Volumen gesteuert werden. Auf diese Weise wird eine Regelung der Entnahmevorrichtung erreicht, um den vorgegebenen Massen- bzw. Volumenstrom einstellen zu können.

Unter einem Massenstrom wird die Masse der transportierten bzw. einer Anlage zu- oder von einer Anlage abgeführten Schrottfragmente pro Zeit verstanden. Wird der Zerkleinerungsanlage beispielsweise ein Massenstrom von 10 t/h zugeführt, so bedeutet dies, dass der Zerkleinerungsanlage bei diesem Massenstrom in einer Stunde 10 t Schrott zugeführt wird.

Unter einem Volumenstrom wird das Volumen der transportierten bzw. einer Anlage zu- oder von einer Anlage abgeführten Schrottfragmente pro Zeit verstanden. Wird der Zerkleinerungsanlage beispielsweise ein Volumenstrom von 10 m³/h zugeführt, so bedeutet dies, dass der Zerkleinerungsanlage bei diesem Volumenstrom in einer Stunde 10 m³ Schrott zugeführt wird.

Ist die Schüttdichte der Schrottfragmente bekannt, so kann der Massenstrom einfach in den Volumenstrom bzw. der Volumenstrom in den Massenstrom umgerechnet werden.

Unter einem vorgegebenen Massen- bzw. Volumenstrom wird verstanden, dass der Massen- bzw. Volumenstrom in einer bestimmten Weise von außen vorgegeben ist, beispielsweise durch einen einzelnen Wert oder durch einen Bereich, in dem der Massen- bzw. Volumenstrom liegen soll. Vorzugsweise ist der vorgegebene Massen- bzw. Volumenstrom an die Sortieranlage angepasst, so dass in der Sortieranlage eine effektive Sortierung erfolgt und möglichst wenige Störungen auftreten.

Gemäß dem ersten Aspekt der vorliegenden Offenbarung wird die oben genannte Aufgabe erfindungsgemäß weiterhin zumindest teilweise gelöst durch ein Recyclingverfahren zur Aufbereitung von Aluminiumschrott, insbesondere UBC-Schrott, insbesondere unter Verwendung der zuvor beschriebenen Recyclinganlage, bei dem eine Menge Schrott zerkleinert wird, bei dem der zerkleinerte Schrott in einem Pufferspeicher zwischengelagert wird und bei dem der Schrott dem Pufferspeicher mit einem vorgegebenen Massen- oder Volumenstrom entnommen und sortiert wird.

Bei der Sortierung handelt es sich vorzugsweise um eine sensorgestütze Sortierung, insbesondere um eine LIBS-basierte Sortierung. Zusätzlich oder alternativ kommen beispielsweise auch eine Röntgentransmission-basierte, eine Röntgenfluoreszens-basierte, eine Induktions-basierte und/oder eine NIR-basierte Sortierung in Betracht.

Im Folgenden werden verschiedene Ausführungsformen der Recyclinganlage und des Recyclingverfahrens beschrieben, wobei die einzelnen Ausführungsformen jeweils sowohl für die Recyclinganlage als auch für das Recyclingverfahren anwendbar sind und sich zudem untereinander kombinieren lassen.

Bei einer ersten Ausführungsform umfasst die Sortieranlage eine oder mehrere Sortiervorrichtungen, die für eine einzelkorngenaue Sortierung eingerichtet sind. Mit Sortieranlagen mit einzelkorngenauen Sortiervorrichtungen lassen sich gute Sortierergebnisse erreichen. Allerdings erfordern diese Sortieranlagen auch einen möglichst gleichmäßigen Massen- bzw. Volumenstrom der Schrottfragmente für eine effiziente Sortierung. Beispielsweise führt ein zu hoher Massen- bzw. Volumenstrom zur Überlappung von Schrottfragmenten, die eine einzelkorngenaue Sortierung behindern. Der erste Pufferspeicher, der einen vorgegebenen Massen- oder Volumenstrom zur Sortieranlage sicherstellt, ist daher gerade für Sortieranlagen mit Sortiervorrichtungen zur einzelkorngenauen Sortierung vorteilhaft.

Unter einer einzelkorngenauen Sortierung wird verstanden, dass die einzelnen Fragmente aus dem Massen- bzw. Volumenstrom abhängig von ihrer jeweiligen Beschaffenheit einzeln sortiert werden. Ein Beispiel für eine derartige Sortiervorrichtung ist ein Magnetscheider, mit dem eisenhaltige bzw. magnetische Fragmente mit einem Magnetfeld gezielt aussortiert werden können. Da ein einzelnes Schrottfragment (Korn) bei diesem Vorgang abhängig von seinen eigenen magnetischen Eigenschaften sortiert wird, handelt es sich um eine einzelkorngenaue Sortierung. Ein anderes Beispiel für eine derartige Sortiervorrichtung ist eine Röntgentransmissions-gestützte Sortiervorrichtung, bei dem jedes einzelne Fragment (Korn) mittels Röntgentransmission analysiert und abhängig von dem Analyseergebnis sortiert wird.

Bei einer weiteren Ausführungsform ist der Sortieranlage mindestens eine weitere Anlage nachgeordnet, die zur Weiterverarbeitung des sortierten Schrotts eingerichtet ist, und die Recyclinganlage weist einen zweiten Pufferspeicher auf, der dazu eingerichtet ist, den von der Sortieranlage sortierten Schrott zwischenzulagern und der weiteren Anlage mit einem vorgegebenen Massen- oder Volumenstrom zuzuführen.

Bei der Sortierung werden Verunreinigungen des Aluminiumschrotts, beispielsweise nichtmetallische Verunreinigungen wie Kunststoffe oder Minerale oder auch Fragmente aus Nichtaluminiumlegierungen oder Gussaluminium aussortiert. Aus diesem Grund ist der Massen- bzw. Volumenstrom des sortierten Schrotts immer kleiner oder (bei nicht verunreinigtem Schrott) maximal gleich dem Massen- bzw. Volumenstrom, der der Sortieranlage zugeführt wird. Da Aluminiumschrotte und insbesondere UBC-Schrotte stark schwankende Verunreinigungsgehalte aufweisen können, führt dies selbst bei einem im Wesentlichen konstanten Massen- bzw. Volumenstrom zur Sortieranlage zu einem teilweise deutlich schwankenden Massen- bzw. Volumenstrom hinter der Sortieranlage. So verbleiben beispielsweise von einem der Sortieranlage zugeführten Massenstrom von 10t/h hinter der Sortieranlage noch 9,8t/h bei 2 Gew.-% Verunreinigung, aber nur 7,5t/h bei 25 Gew.-% Verunreinigung. Entsprechend verbleiben beispielsweise von einem der Sortieranlage zugeführten Volumenstrom von 10 m³/h hinter der Sortieranlage noch 9,8 m³/h bei 2 Gew.-% Verunreinigung, aber nur 7,5 m³/h bei 25 Vol.-% Verunreinigung. Noch dazu sind die Schwankungen des Anteils der Verunreinigung im Schrott vor der Sortierung nicht ohne weiteres erkennbar, so dass es hinter der Sortieranlage zu unerwarteten starken Schwankungen des Massen- bzw. Volumenstroms kommen kann, der die weitere Verarbeitung des Schrotts in nachgelagerten Anlagen der Recyclinganlage erschwert.

Durch den zweiten Pufferspeicher können diese in der Regel unvorhersehbaren und zum Teil starken Schwankungen des Massen- bzw. Volumenstroms ausgeglichen werden, so dass der sortierte Schrott der nachgelagerten Anlage mit einem vorgegebenen Massen- oder Volumenstrom zugeführt und die nachgelagerte Anlage dadurch effizienter und störungsärmer betrieben werden kann. Zu diesem Zweck weist der zweite Pufferspeicher insbesondere eine Kammer auf, in der der Schrott zwischengelagert werden kann, sowie eine Entnahmevorrichtung, mit der der Schrott der Kammer kontrolliert entnommen werden kann, um den entnommenen Schrott der nachgelagerten Anlage mit einem vorgegebenen Massen- oder Volumenstrom zuführen zu können. Insbesondere kann der zweite Pufferspeicher eine Gewicht- oder Volumenmesseinrichtung aufweisen zur Messung des Gewichts oder des Volumens von dem Schrott, der dem zweiten Pufferspeicher mit der Entnahmevorrichtung entnommenen wird, und die Entnahmevorrichtung kann abhängig von dem gemessenen Wert für das Gewicht bzw. für das Volumen gesteuert werden. Auf diese Weise wird eine Regelung der Entnahmevorrichtung erreicht, um den vorgegebenen Massen- bzw. Volumenstrom einstellen zu können.

Bei einer weiteren Ausführungsform ist die mindestens eine weitere Anlage, die der Sortieranlage nachgeordnet ist, eine Anlage für den Heißbetrieb. Unter einer Anlage für den Heißbetrieb wird eine Anlage verstanden, in der der Schrott bei Temperaturen von mindestens 300 °C verarbeitet wird.

Indem vor der oder den Anlagen im Heißbetrieb der zweite Pufferspeicher vorgesehen wird, können diese Anlagen mit einem kontinuierlichen und vorgegebenen Massen- oder Volumenstrom des Schrotts versorgt werden, so dass ein kontinuierlicher Heißbetrieb ermöglicht wird. Ein kontinuierlicher Heißbetrieb hat gegenüber einem diskontinuierlichen Heißbetrieb den Vorteil, dass kein ständiges Aufheizen und Abkühlen der Anlagen erforderlich ist und damit insbesondere Energiekosten gespart werden können.

Bei der mindestens einen Anlage im Heißbetrieb kann es sich insbesondere um eine Entlackungsanlage handeln, die dazu eingerichtet ist, den von der Sortieranlage sortierten Schrott zu entlacken. In derartigen Entlackungsanlagen wird der zugeführte Schrott typischerweise auf eine Temperatur von mindestens 300 °C, insbesondere mehr als 400 °C erhitzt, so dass Lackschichten von der Oberfläche der Schrottfragmente verdampfen. Entlackungsanlagen sind bei starken Massen- bzw. Volumenstromschwankungen störanfällig und wenig effektiv, so dass durch den zweiten Pufferspeicher eine bessere und störungsfreiere Entlackung des Schrotts erreicht wird.

Weiterhin kann es sich bei der Anlage im Heißbetrieb auch um einen Schmelzofen handeln, der dazu eingerichtet ist, den sortierten Schrott einzuschmelzen. In einem solchen Schmelzofen werden die Aluminiumschrottfragmente also auf eine Temperatur oberhalb ihrer Schmelztemperatur erwärmt.

Bei einer entsprechenden Ausführungsform des Verfahrens wird der sortierte Aluminiumschrott in einem zweiten Pufferspeicher zwischengelagert und wird der Aluminiumschrott dem zweiten Pufferspeicher automatisch mit einem vorgegebenen Massen- oder Volumenstrom entnommen und weiterverarbeitet, insbesondere entlackt und/oder eingeschmolzen.

Im Anschluss an die Sortierung wird der aufbereitete Schrott, ggf. nach einer optionalen Entlackung, demnach vorzugsweise eingeschmolzen und metallurgisch verwertet. Die Anforderungen an einen effizienten Schmelzprozess umfassen neben den Anforderungen an die Schrottzusammensetzung auch einen kontinuierlichen Massen- oder Volumenstrom an Aluminiumschrott in den Schmelzofen. Größere Schwankungen des Massen- bzw. Volumenstroms verursachen in der Regel Probleme beim Einschmelzen der Schrotte (bspw. durch Temperaturschwankungen des Flüssigmetalls, Schwankungen im Emissionsverhalten, etc.). Durch den zweiten Pufferspeicher kann der Schmelzofen mit einem kontinuierlichen Massen- bzw. Volumenstrom versorgt werden, so dass ein effizienter Schmelzprozess erzielt wird.

Bei einer weiteren Ausführungsform ist die Kapazität des ersten und/oder zweiten Pufferspeichers so bemessen, dass aus einem gefüllten Pufferspeicher die jeweils nachfolgende Anlage für mindestens 1 h, vorzugsweise mindestens 2 h, weiter bevorzugt mindestens 5 h, insbesondere mindestens 10 h versorgt werden kann, wenn die nachfolgende Anlage mit Regeldurchsatz betrieben wird. Vorzugsweise liegt die Kapazität des ersten und/oder zweiten Pufferspeichers in einem Bereich von 10 bis 10.000 m$^3$, weiter bevorzugt in einem Bereich von 250 und 5.000 m$^3$, insbesondere in einem Bereich von 250 und 1.000 m$^3$.

Bei einer weiteren Ausführungsform entspricht die Kapazität des ersten und/oder zweiten Pufferspeichers vorzugsweise mindestens der Verarbeitungskapazität der jeweils nachfolgenden Anlage im Regelbetrieb von 1h, d.h. der Masse bzw. dem Volumen, das von der nachfolgenden Anlage im Regelbetrieb in einer Stunde verarbeitet wird. Vorzugsweise entspricht die Kapazität des ersten und/oder zweiten Pufferspeichers mindestens der aus folgender Formel berechneten Mindestkapazität K$_{min}$:

$$K_{min} = (V_{nach} - V_{vor}) * VMR_{nach} * 24\ h,$$

wobei V$_{nach}$ die Verfügbarkeit der dem Pufferspeicher nachfolgenden Anlage in % und V$_{vor}$ die Verfügbarkeit der dem Pufferspeicher vorhergehenden Anlage in % ist, d.h. der Prozentsatz der Zeit, den die jeweilige Anlage für den Regelbetrieb zur Verfügung steht, und wobei VMR$_{nach}$ die Verarbeitungskapazität der dem Pufferspeicher nachfolgenden Anlage pro Stunde im Regelbetrieb ist, d.h. die Masse bzw. das Volumen, das von der nachfolgenden Anlage pro Stunde verarbeitet wird.

Weiter bevorzugt entspricht die Kapazität des ersten und/oder zweiten Pufferspeichers maximal der aus folgender Formel berechneten Maximalkapazität K$_{max}$:

$$K_{max} = (VMR_{nach} / V_{nach}) * 48h,$$

wobei $V_{nach}$ die Verfügbarkeit der dem Pufferspeicher nachfolgenden Anlage in % und $VMR_{nach}$ die Verarbeitungskapazität der dem Pufferspeicher nachfolgenden Anlage pro Stunde im Regelbetrieb ist.

Je größer der erste und ggf. zweite Pufferspeicher dimensioniert sind, desto größer ist die Prozessunabhängigkeit der Anlagen vor und hinter dem jeweiligen Pufferspeicher voneinander. Andererseits führt ein größerer Pufferspeicher auch zu höheren Kosten und einem erhöhten Platzaufwand. Eine Dimensionierung in den oben genannten Bereichen hat sich als guter Kompromiss herausgestellt, um die Recyclinganlage prozesssicher, effektiv und wirtschaftlich betreiben zu können.

Durch die zuvor beschriebene bevorzugte Kapazität des ersten bzw. zweiten Pufferspeichers ist es insbesondere möglich, die einzelnen Anlagen der Recyclinganlage auf verschiedene Weisen und damit sehr flexibel zu betreiben. So kann die Zerkleinerungsanlage beispielsweise mit hohem Durchsatz im Einschichtbetrieb, die Sortieranlage mit geringerem, aber kontinuierlichen Durchsätzen im Zweischichtbetrieb und die Entlackungsanlage und der Schmelzofen kontinuierlich im Dreischichtbetrieb gefahren werden.

Bei einer weiteren Ausführungsform ist der erste Pufferspeicher mehrzellig mit mindestens einer ersten und einer zweiten Kammer ausgebildet und ist der erste Pufferspeicher dazu eingerichtet, der Sortieranlage Schrott wahlweise aus der ersten Kammer oder aus der zweiten Kammer oder optional eine Schrottmischung aus beiden Kammern zuzuführen.

Bei einer weiteren Ausführungsform ist der zweite Pufferspeicher mehrzellig mit mindestens einer ersten und einer zweiten Kammer ausgebildet und ist der zweite Pufferspeicher dazu eingerichtet, der nachfolgenden Anlage Schrott wahlweise aus der ersten Kammer oder aus der zweiten Kammer oder optional eine Schrottmischung aus beiden Kammern zuzuführen.

Unter einem mehrzelligen Pufferspeicher wird ein Pufferspeicher verstanden, der mehrere separate Kammern, insbesondere eine erste und eine zweite Kammer zur Zwischenlagerung von Schrott aufweist. Die erste und die zweite Kammer können insbesondere unabhängig voneinander mit Schrott befüllt werden. Zu diesem Zweck kann der mehrzellige Pufferspeicher insbesondere ein Zuführungssystem aufweisen, beispielsweise mit einer wahlweise in beide Drehrichtungen antreibbaren Förderschnecke oder einem Reversierband, mit dem dem Pufferspeicher zugeführter Schrott wahlweise in die erste oder in die zweite Kammer gefüllt werden kann.

Bei den zuvor beschriebenen Ausführungsformen ist der erste bzw. zweite Pufferspeicher dazu eingerichtet, der nachfolgenden Anlage Schrott wahlweise aus der ersten Kammer oder aus der zweiten Kammer oder optional eine Schrottmischung aus beiden Kammern zuzuführen. Zu diesem Zweck kann an der ersten Kammer eine ansteuerbare erste Entnahmevorrichtung zur Entnahme von Schrott aus der ersten Kammer und an der zweiten Kammer eine ansteuerbare zweite Entnahmevorrichtung zur Entnahme von Schrott aus der zweiten Kammer vorgesehen sein. Weiterhin kann eine Schrottsammelvorrichtung vorgesehen sein, der der ersten und/oder der zweiten Kammer entnommener Schrott zugeführt wird, um diesen der nachfolgenden Anlage zuzuführen.

Indem der erste bzw. zweite Pufferspeicher mehrzellig ausgebildet werden, können in dem Pufferspeicher verschiedene Schrottqualitäten nebeneinander verfügbar gehalten werden. Ergibt sich beispielsweise bei der Verarbeitung des Schrotts, der einer der Kammern des Pufferspeichers entnommen wurde, in einer nachfolgenden Anlage, dass der Schrott einen zu hohen Verunreinigungsanteil aufweist, so kann kurzfristig auf eine andere Kammer des Pufferspeichers umgestellt werden.

Wird beispielsweise festgestellt, dass die Temperatur einer dem zweiten Pufferspeicher nachfolgenden Entlackungsanlage aufgrund zu hoher Kunststoffverunreinigungen im Schrott über einen vorgegebenen Schwellenwert ansteigt, so kann beispielsweise manuell oder automatisch auf eine andere Kammer des Pufferspeichers umgestellt werden, um die Temperatur in der Entlackungsanlage wieder in den gewünschten Bereich zu fahren.

Weiterhin ist es mit einem mehrzelligen Pufferspeicher möglich, verschiedene Schrottqualitäten, beispielsweise Schrotte mit unterschiedlichem Verunreinigungsgrad oder mit unterschiedlichen Aluminiumlegierungen der Aluminiumdosenfragmente, zu mischen, um beim Einschmelzen die gewünschte Legierungszusammensetzung zu erhalten. Zu diesem Zweck können Stichprobenmessungen an Schrottlieferungen durchgeführt werden, bevor diese der Recyclinganlage zugeführt werden. Auf diese Weise ist die Zusammensetzung der aufbereiteten Schrotte zumindest grob bekannt, so dass mit dem mehrzelligen Pufferspeicher eine gezielte Mischung der Schrotte aus verschiedenen Schrottlieferungen möglich ist.

Bei einer weiteren Ausführungsform weist der erste oder der zweite Pufferspeicher einen Notauslass auf, der dazu eingerichtet ist, wahlweise der ersten oder der zweiten Kammer Schrott zu entnehmen, um diesen gesondert aus der Recyclinganlage heraus zu führen. Auf diese Weise ist es möglich, der Recyclinganlage während des laufenden Betriebes Schrott zu entnehmen, beispielsweise wenn dieser einen zu hohen Verunreinigungsanteil aufweist. Wird beispielsweise bei der Weiterverarbeitung von Schrott, der einer ersten Kammer des Pufferspeichers entnommen wurde, festgestellt, dass dessen Verunreinigungsanteil zu hoch ist, so kann die Entnahme kurzfristig auf eine zweite Kammer des Pufferspeichers umgestellt werden. Der zu stark verunreinigte Schrott kann dann der ersten Kammer über den Notauslass entnommen und auf diese Weise gesondert vom normalen Prozessablauf aus der Prozessstrecke der Recyclinganlage zu entnehmen.

Bei einer weiteren Ausführungsform umfasst der erste oder der zweite Pufferspeicher mindestens ein Silo zur Zwischenlagerung des Schrotts. Silos sind aus anderen Technikfeldern, insbesondere zur Lagerung von Sand oder Getreide, bekannt und am Markt in verschiedenen Größen und Konfigurationen verfügbar. Es hat sich gezeigt, dass sich ein solches Silo auch gut zur Zwischenlagerung des Schrotts eignet. Dadurch lassen sich am Markt verfügbare und in der Anschaffung vergleichsweise günstige Silos als Kammern des Pufferspeichers einsetzten, so dass die Installationskosten der Recyclinganlage reduziert werden können.

Bei einer weiteren Ausführungsform umfasst der erste oder der zweite Pufferspeicher mindestens ein Silo zur Zwischenlagerung des Schrotts, wobei das Silo eine geregelte Entnahmevorrichtung aufweist, die dazu eingerichtet ist, Schrott mit einem vorgegebenen Massen- oder Volumenstrom aus dem Silo auszulassen, um den Schrott der nachfolgenden Anlage zuzuführen.

Am Silo ist vorzugsweise eine Wägeeinrichtung vorgesehen, mit der der aus dem Silo ausgelassene Schrott gewogen werden kann. Vorzugsweise wird die Entnahmevorrichtung durch das mit der Wägeeinrichtung ermittelte Gewicht geregelt, um auf diese Weise den vorgegebenen Massenstrom einstellen zu können. Bei bekannter oder vorgegebener Schüttdichte kann mit der Wägeeinrichtung auch das Volumen des entnommenen Schrotts berechnet bzw. abgeschätzt werden. Dadurch kann die Entnahmevorrichtung insbesondere auch durch das mit der Wägeeinrichtung ermittelte Gewicht geregelt, um auf diese Weise den vorgegebenen Volumenstrom einstellen zu können. Am Silo kann auch eine Volumenmesseinrichtung vorgesehen sein, mit dem das Volumen des aus dem Silo ausgelassenen Schrotts bestimmt werden kann. In diesem Fall kann die Entnahmevorrichtung durch das mit der Volumenmesseinrichtung ermittelte Volumen geregelt werden, um den vorgegebenen Volumenstrom einstellen zu können.

Bei einer weiteren Ausführungsform weist die Recyclinganlage eine Steuerungseinrichtung zur Steuerung der Recyclinganlage auf, die dazu eingerichtet ist, die Recyclinganlage entsprechend dem zuvor beschriebenen Recyclingverfahren bzw. einer Ausführungsform davon zu steuern. Die Steuerungseinrichtung weist vorzugsweise einen Mikroprozessor und einen damit verbundenen Speicher auf, wobei der Speicher Befehle enthält, deren Ausführung auf dem Mikroprozessor die Steuerung der Recyclinganlage entsprechend dem zuvor beschriebenen Recyclingverfahren bzw. einer Ausführungsform davon veranlasst.

Um eine Verarbeitungsstation zur Aufbereitung von Aluminiumschrott, wie zum Beispiel die Sortieranlage der zuvor beschriebenen Recyclinganlage, am optimalen Betriebspunkt betreiben zu können, werden die Schrottfragmente der Verarbeitungsstation vorzugsweise in geregelter Weise zugeführt.

Dies kann gemäß einem zweiten Aspekt der vorliegenden Offenbarung durch ein Verfahren zum Betrieb einer Anlage zur Aufbereitung von Aluminiumschrott erreicht werden, bei dem Schrottfragmente bereitgestellt werden, bei dem die bereitgestellten Schrottfragmente als Strom von Schrottfragmenten zu einer Verarbeitungsstation zur Aufbereitung von Aluminiumschrott gefördert werden, bei dem an dem Strom von Schrottfragmenten ein Wert für den Durchsatz bestimmt wird und bei dem der bestimmte Wert für den Durchsatz mit einem vorgegebenen Wert für den Durchsatz verglichen wird, wobei die Bereitstellung der Schrottfragmente und/oder die Förderung der Schrottfragmente zu der Verarbeitungsstation abhängig vom Ergebnis des Vergleichs gesteuert werden.

Weiterhin kann dies gemäß dem zweiten Aspekt der vorliegenden Offenbarung erreicht werden durch eine Anlage zur Aufbereitung von Aluminiumschrott mit einer Verarbeitungsstation zur Aufbereitung von Aluminiumschrott, mit einer Bereitstellungsstation, die zur Bereitstellung von Schrottfragmenten eingerichtet ist, mit einer Fördereinrichtung, die dazu eingerichtet ist, von der Bereitstellungstation bereitgestellte Schrottfragmente als Strom zur Verarbeitungsstation zu transportieren und dieser zuzuführen, mit einer Durchsatzmesseinrichtung, die dazu eingerichtet ist, an einem von der Fördereinrichtung transportierten Strom von Schrottfragmenten einen Wert für den Durchsatz des Stroms zu messen, und mit einer Steuerungseinrichtung, die dazu eingerichtet ist, einen von der Durchsatzmesseinrichtung gemessenen Wert für den Durchsatz mit einem vorgegebenen Wert für den Durchsatz zu vergleichen und die Bereitstellungsstation und/oder die Fördereinrichtung abhängig vom Ergebnis dieses Vergleichs zu steuern.

Bei der Verarbeitungsstation kann es sich insbesondere um eine Zerkleinerungsanlage handeln. Durch die Zuführung von Schrottfragmenten mit geregeltem Durchsatz kann die Zerkleinerungsanlage am optimalen Betriebspunkt betrieben werden, um einen bestimmten Zerkleinerungsgrad zu erreichen. Bei einer Überlastung der Zerkleinerungsanlage durch einen zu großen Durchsatz kann es je nach Typ der Zerkleinerungsanlage dazu kommen, dass die Schrottfragmente zu stark oder zu schwach zerkleinert werden.

Bei der Verarbeitungsstation kann es sich auch um eine Sortieranlage handeln, beispielsweise um die Sortieranlage der Recyclinganlage gemäß dem ersten Aspekt der vorliegenden Offenbarung. Durch die Zuführung von Schrottfragmenten mit geregeltem Durchsatz kann die Sortieranlage am optimalen Betriebspunkt betrieben werden, um die einzelnen Schrottfragmente zuverlässig bei möglichst hohem Durchsatz sortieren zu können. Bei einer Überlastung der Sortieranlage durch einen zu großen Durchsatz nimmt die Sortierqualität ab, so dass es zu unerwünschten Verunreinigungen in dem aus der Sortieranlage austretenden Schrottfragmente-Strom kommen kann.

Bei der Verarbeitungsstation kann es sich auch um eine Schmelzanlage handeln. Durch die Zuführung von Schrottfragmenten mit geregeltem Durchsatz kann die Schmelzanlage am optimalen Betriebspunkt betrieben werden. Eine Überlastung der Schmelzanlage bei zu großem Durchsatz kann die Temperatur in der Schmelzanlage zu stark absinken oder eine ungleichmäßige Schmelze entstehen lassen.

Die Fördereinrichtung umfasst vorzugsweise ein oder mehrere Transportbänder.

Das Verfahren zum Betrieb einer Anlage zur Aufbereitung von Aluminiumschrott und die Anlage zur Aufbereitung von Aluminiumschrott gemäß dem zweiten Aspekt der vorliegenden Offenbarung stellen jeweils unabhängige und eigenständige erfindungsgemäße Lehren dar.

Darüber hinaus kann der zweite Aspekt der vorliegenden Offenbarung in vorteilhafter Weise mit dem Recyclingverfahren und der Recyclinganlage gemäß dem ersten Aspekt der vorliegenden Offenbarung kombiniert werden. Insbesondere kann es sich bei der Anlage zur Aufbereitung von Aluminiumschrott gemäß dem zweiten Aspekt der vorliegenden Offenbarung um die Recyclinganlage gemäß dem ersten Aspekt der vorliegenden Offenbarung handeln, wobei die Sortieranlage eine Verarbeitungsstation zur Aufbereitung von Aluminiumschrott und der erste Pufferspeicher eine Bereitstellungsstation darstellen.

Bei einer entsprechenden Ausführungsform der Recyclinganlage sind entsprechend eine Fördereinrichtung zum Transport von Schrottfragmenten vom ersten Pufferspeicher zur Sortieranlage, eine Durchsatzmesseinrichtung zur Messung eines Werts für den Durchsatz des von der Fördereinrichtung transportierten Stroms von Schrottfragmenten und eine Steuerungseinrichtung vorgesehen, die dazu eingerichtet ist, den gemessenen Wert mit einem vorgegebenen Wert für den Durchsatz zu vergleichen und den ersten Pufferspeicher, insbesondere eine Entnahmevorrichtung des ersten Pufferspeichers, und/oder die Fördereinrichtung abhängig vom Ergebnis des Vergleichs zu steuern. Bei einer entsprechenden Ausführungsform des Recyclingverfahrens wird der dem Pufferspeicher entnommene Massenstrom zu einer Sortieranlage gefördert, wird an dem Massenstrom ein Wert für den Durchsatz bestimmt, wird der bestimmte Wert mit einem vorgegebenen Wert für den Durchsatz verglichen und wird die automatische Entnahme des Aluminiumschrotts aus dem Pufferspeicher und/oder dessen Förderung zur Sortieranlage abhängig vom Ergebnis des Vergleichs gesteuert.

Im Folgenden werden noch weitere Ausführungsformen des Verfahrens und der Anlage gemäß dem zweiten Aspekt der vorliegenden Offenbarung sowie der Recyclinganlage und des Recyclingverfahrens gemäß dem ersten Aspekt der vorliegenden Offenbarung beschrieben, wobei die einzelnen Ausführungsformen für das Verfahren und die Anlage gemäß dem zweiten Aspekt und die Recyclinganlage und das Recyclingverfahren gemäß dem ersten Aspekt gleichermaßen gelten und sowohl untereinander als auch mit den zuvor beschriebenen Ausführungsformen kombiniert werden können.

Bei einer Ausführungsform werden die Schrottfragmente durch eine vorhergehende Verarbeitungsstation zur Aufbereitung von Aluminiumschrott bereitgestellt. Bei einer entsprechenden Ausführungsform ist die Bereitstellungsstation eine vorhergehende Verarbeitungsstation zur Aufbereitung von Aluminiumschrott. In diesem Fall kann über die Regelung anhand der Durchsatzmesseinrichtung auch dann eine Zufuhr von Schrottfragmenten zur Verarbeitungsstation in einem vorgegebenen Durchsatzbereich sichergestellt werden, wenn die vorhergehende Verarbeitungsstation die Schrottfragmente mit ungleichmäßigem oder ungeeignetem Durchsatz zur Verfügung stellt.

Zur Pufferung großer Durchsatzschwankungen der vorhergehenden Verarbeitungsstation ist zwischen der Verarbeitungsstation und der vorhergehenden Verarbeitungsstation vorzugsweise ein Pufferspeicher, wie zum Beispiel ein Silo, angeordnet. In diesem Fall kann zum Beispiel der Pufferspeicher bzw. eine Entnahmeeinrichtung des Pufferspeichers abhängig von dem Ergebnis des Vergleichs gesteuert werden, um eine Zufuhr zu der Verarbeitungsstation in einem vorgegebenen Durchsatzbereich zu erreichen.

Bei einer weiteren Ausführungsform ist der Wert für den Durchsatz des Stroms ein Wert für den Massenstrom, für den Volumenstrom, für die Stückzahlrate oder für die Flächenrate. Zur Erfassung eines Werts für den Massenstrom kann beispielsweise eine Bandwaage vorgesehen sein, die insbesondere in die Fördereinrichtung integriert sein kann. Zur Erfassung eines Werts für den Volumenstrom kann eine Lasertriangulationseinrichtung vorgesehen sein. Bei der Lasertriangulation können insbesondere ein Laserstrahl auf die Fördereinrichtung, insbesondere auf ein Transportband, gerichtet und die Position des Laserspots mittels mehrerer Kameras bestimmt werden (durch Triangulation). Auf diese Weise kann die Füllhöhe der Schrottfragmente auf der Fördereinrichtung, z.B. dem Transportband, anhand der vertikalen Position des Laserspots bestimmt und damit ein Wert für den Volumenstrom abgeleitet werden. Zur Erfassung eines Werts für die Stückzahlrate (d.h. die Anzahl der Schrottfragmente pro Zeiteinheit) sind vorzugsweise eine Vereinzelungseinrichtung vorgesehen, die die Schrottfragmente vereinzelt, sowie eine Erfassungseinrichtung, beispielsweise eine Kamera, eine Lichtschranke oder eine laser- oder röntgengestützte Erfassungseinheit, die die vereinzelten Schrottfragmente erfasst, so dass die Anzahl der Schrottfragmente pro Zeiteinheit bestimmt werden kann. Zur Erfassung eines Werts für die Flächenrate (d.h. die durch die Schrottfragmente belegte Fläche eines Transportbands in Prozent) kann beispielsweise eine über einem Transportband angeordnete Kamera vorgesehen sein, die Bilddaten vom Transportband erfasst, aus denen die belegte Fläche auf dem Transportband bestimmt werden kann.

Bei einer weiteren Ausführungsform ist die Steuerungseinrichtung dazu eingerichtet, den gemessenen Wert für den Durchsatz mit einem unteren und mit einem oberen Grenzwert zu vergleichen und die Bereitstellungsstation und/oder die Fördereinrichtung derart abhängig vom Vergleichsergebnis zu steuern, dass der Durchsatz um einen vorgegebenen Wert erhöht wird, wenn der gemessene Wert für den Durchsatz für eine vorgegebene Zeitdauer unter dem unteren Grenzwert liegt, und dass der Durchsatz um einen vorgegebenen Wert reduziert wird, wenn der gemessene Wert für den Durchsatz für eine vorgegebene Zeitdauer über dem oberen Grenzwert liegt. Der obere Grenzwert ist größer als der untere Grenzwert. Durch den unteren und oberen Grenzwert erfolgt eine Regelung auf einen zulässigen Durchsatzbereich. Durch die vorgegebene Zeitdauer wird zudem erreicht, dass bei sehr kurzfristigen Schwankungen des Durchsatzes nicht sofort nachgeregelt wird, sondern erst, wenn die Durchsatzschwankung über eine bestimmte Zeitdauer anhält. Auf diese Weise wird berücksichtigt, dass sich gewisse Schwankungen im Durchsatz der Schrottfragmente nicht vermeiden lassen, so dass eine übermäßige und unnötige Regelung vermieden wird.

Bei einer weiteren Ausführungsform ist die Steuerungseinrichtung dazu eingerichtet ist, eine erneute Reduzierung oder Erhöhung des Durchsatzes nach einer erfolgten Reduzierung oder Erhöhung des Durchsatzes erst nach Ablauf einer vorgegebenen Zeitdauer zuzulassen. Auf diese Weise wird berücksichtigt, dass zwischen der Nachregelung der Bereitstellungsstation oder der Fördereinrichtung und der messbaren Reduzierung bzw. Erhöhung des Durchsatzes eine Latenz besteht. Eine Überregelung wird auf diese Weise vermieden. Insbesondere wird auf diese Weise vermieden, dass der Durchsatz zu stark erhöht wird, was zu einer Überlastung der Verarbeitungsstation führen kann.

Bei einer weiteren Ausführungsform ist die Steuerungseinrichtung dazu eingerichtet, den gemessenen Wert für den Durchsatz mit einem ersten oberen Grenzwert und mit einem zweiten, höheren oberen Grenzwert zu vergleichen, und die Bereitstellungsstation und/oder die Fördereinrichtung derart abhängig vom Ergebnis der Vergleiche zu steuern, dass der Durchsatz um einen ersten vorgegebenen Wert reduziert wird, wenn der gemessene Wert für den Durchsatz für eine vorgegebene Zeitdauer über dem ersten oberen Grenzwert liegt, und dass der Durchsatz um einen zweiten vorgegebenen Wert reduziert wird, sobald der gemessene Wert für den Durchsatz über dem zweiten oberen Grenzwert liegt. Auf diese Weise wird eine kombinierte Regelung erreicht. Einerseits wird bei einer anhaltenden moderaten Abweichung, d.h. bei Überschreiten des ersten oberen Grenzwerts für einen bestimmten _Zeitraum, eine moderate Regelung durchgeführt, so dass eine zu starke Nachregelung unterbleibt. Andererseits wird bei einer starken Abweichung, d.h. bei Überschreiten des zweiten oberen Grenzwerts, eine sofortige, vorzugsweise starke Reduktion des Durchsatzes erreicht, um eine Überlastung der Verarbeitungsstation zu vermeiden.

Weitere Vorteile und Merkmale der vorliegenden Erfindung ergeben sich aus der nachfolgenden Beschreibung von Ausführungsbeispielen, wobei auf die beigefügte Zeichnung Bezug genommen wird.

In der Zeichnung zeigen

Fig. 1    mehrere Pakete UBC-Schrott mit geringem Kompaktierungsgrad,

Fig. 2    mehrere Pakete UBC-Schrott mit hohem Kompaktierungsgrad,

Fig. 3    eine Diagrammdarstellung einer Recyclinganlage bzw. eines Recyclingverfahrens für Aluminiumschrott aus dem Stand der Technik,

Fig. 4    eine Diagrammdarstellung eines Ausführungsbeispiels der erfindungsgemäßen Recyclinganlage und des erfindungsgemäßen Recyclingverfahrens,

Fig. 5    den ersten Pufferspeicher der Recyclinganlage aus Fig. 4 und

Fig. 6    ein Ausführungsbeispiel des Verfahrens und der Anlage gemäß dem zweiten Aspekt der vorliegenden Offenbarung.

Die vorliegend beschriebene Recyclinganlage ist insbesondere zur Aufbereitung von UBC-Schrott vorgesehen. Bei UBC-Schrott handelt es sich um Schrott aus gebrauchten Aluminiumgetränkedosen. Für die Herstellung von Aluminiumdosen werden in der Praxis nur wenige verschiedene Aluminiumlegierungen verwendet, nämlich aus der AA5xxx-Serie (AA: Aluminum Association), insbesondere AA5184, und aus der AA3xxx-Serie, insbesondere AA3104, so dass Schrott aus Aluminiumgetränkedosen prinzipiell gut für das Recycling geeignet ist.

Allerdings weisen am Schrottmarkt verfügbare UBC-Schrotte neben dem eigentlichen Aluminiumdosenschrott verschiedene Arten von Verunreinigungen auf, die vor einer metallurgischen Verwertung des Schrotts entfernt werden müssen.

Typischerweise weist UBC-Schrott verschiedene nicht-metallische Verunreinigungen, wie Kunststofffolien, Sand oder Wasser auf, aber auch verschiedene metallische Verunreinigungen wie Fragmente aus Nichtaluminiumlegierungen oder Gussaluminium auf.

Neben der Vielfalt der verschiedenen Verunreinigungen, besteht bei der Aufbereitung von UBC-Schrott eine weitere Herausforderung darin, dass der Schrott an den Aluminiumdosen-Sammelstellen und Schrottplätzen zu mehr oder weniger stark kompaktierten Paketen zusammengepresst wird.

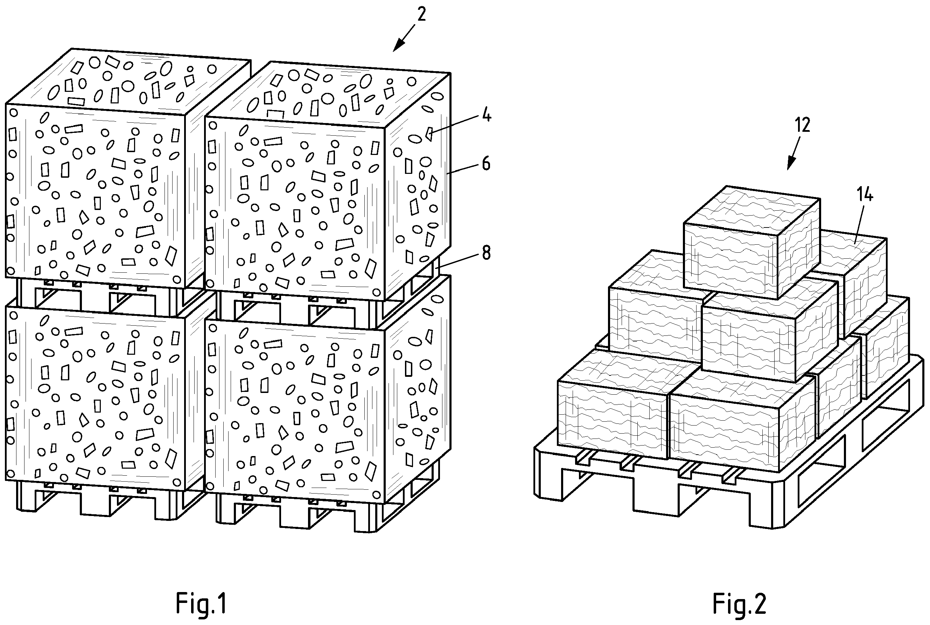

Fig. 1 zeigt ein Beispiel von Paketen 2 aus UBC-Schrott, die einen relativ geringen Kompaktierungsgrad mit einer Dichte von 200 kg/m$^3$ aufweisen. Die in den Paketen enthaltenen Aluminiumdosen bzw. Aluminiumdosenfragmente 4 sind relativ lose zusammengepresst. Typischerweise lassen sich derartigen Paketen 2 einzelne Aluminiumdosenfragmente 4 bereits mit relativ geringem Kraftaufwand, teilweise sogar per Hand, entnehmen. Um den Paketverbund zu erhalten, sind derartige Pakete typischerweise mit einer Kunststofffolie 6 umwickelt und können z.B. auf einer Palette 8 gelagert bzw. transportiert.

Fig. 2 zeigt ein Beispiel von Paketen 12 aus UBC-Schrott, die einen hohen Kompaktierungsgrad mit einer Dichte von 1200 kg/m$^3$ aufweisen. Die in den Paketen enthaltenen Aluminiumdosen bzw. Aluminiumdosenfragmente 14 sind stark zusammengepresst. Typischerweise ist es nicht möglich, Aluminiumdosenfragmente 14 per Hand aus einem solchen Paket 12 zu entnehmen. Insbesondere sind die Aluminiumdosenfragmente 14 so stark zusammen gepresst, dass die Pakete auch ohne weitere Hilfsmittel wie Kunststofffolien oder dgl. zusammenhalten.

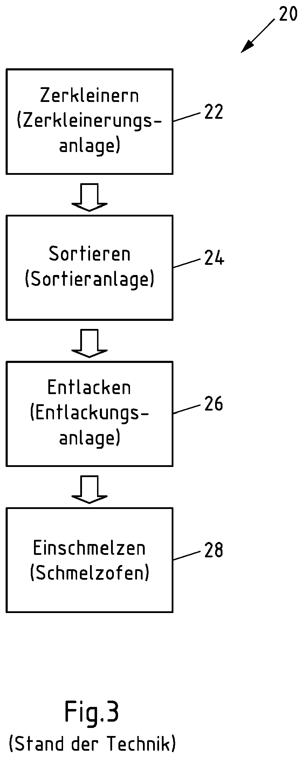

Fig. 3 zeigt nun eine Diagrammdarstellung einer Recyclinganlage bzw. eines Recyclingverfahrens für Aluminiumschrott aus dem Stand der Technik. Die Recyclinganlage 20 umfasst eine Zerkleinerungsanlage 22, eine Sortieranlage 24, eine Entlackungsanlage 26 und einen Schmelzofen 28.

Zur Aufbereitung von UBC-Schrott wird der Schrott zunächst in die Zerkleinerungsanlage 22 gegeben und dort zerkleinert. Der zerkleinerte Schrott wird sodann in die Sortieranlage 24 gegeben und dort sortiert, um Verunreinigungen aus dem Schrott zu entfernen. Der sortierte Schrott wird dann der Entlackungsanlage 26 zugeführt, um Lackschichten von den Getränkedosenfragmenten zu entfernen, und schließlich im Schmelzofen 28 eingeschmolzen.

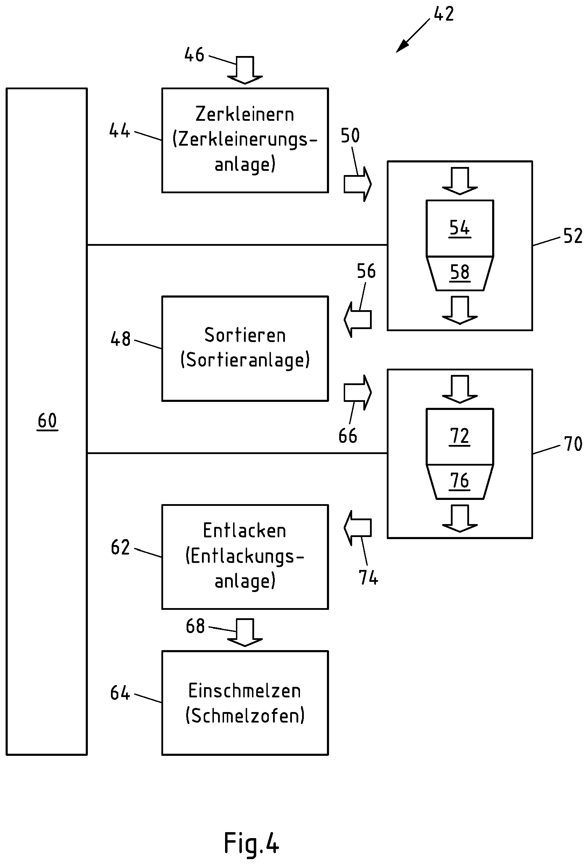

Fig. 4 zeigt nun eine Diagrammdarstellung eines Ausführungsbeispiels der erfindungsgemäßen Recyclinganlage und des erfindungsgemäßen Recyclingverfahren zur Aufbereitung von Aluminiumschrott, insbesondere UBC-Schrott.

Die Recyclinganlage 42 umfasst eine Zerkleinerungsanlage 44, die dazu eingerichtet ist, der Recyclinganlage 42 zugeführten UBC-Schrott 46 zu zerkleinern. Zu diesem Zweck kann die Zerkleinerungsanlage 44 beispielsweise eine Hammermühle umfassen, in der Schrott mittels schnell rotierender Hämmer zerkleinert wird. Anstelle einer Hammermühle kann die Zerkleinerungsanlage 44 auch einen sogenannten Einwellenzerkleinerer aufweisen, der auf einer Rotorwelle angeordnete Messer aufweist, die in ein am Gehäuse angebrachtes Gegenmesser greifen. Der UBC-Schrott 46 kann der Recyclinganlage 42 beispielsweise zugeführt werden, indem mit einem Polypgreifer UBC-Schrott-Pakete mit unterschiedlichem Kompaktierungsgrad, wie zum Beispiel die in den Figuren 1 und 2 gezeigten Pakete 2 und 12, in eine Zuführung der Zerkleinerungsanlage 44 gegeben werden.

Die Recyclinganlage 42 umfasst weiterhin eine der Zerkleinerungsanlage 44 nachgeordneten Sortieranlage 48, die dazu eingerichtet ist, den von der Zerkleinerungsanlage 44 zerkleinerten Schrott 50 zu sortieren. Zu diesem Zweck weist die Sortieranlage 48 vorzugsweise mehrere Sortiervorrichtungen auf, in denen verschiedene Verunreinigungen wie zum Beispiel Kunststoffe oder Fragmente aus Fremdlegierungen oder Gussaluminium aus dem UBC-Schrott aussortiert werden.

Zwischen der Zerkleinerungsanlage 44 und der Recyclinganlage 42 ist ein erster Pufferspeicher 52 vorgesehen. Der Pufferspeicher 52 ist dazu eingerichtet, den von der Zerkleinerungsanlage 44 zerkleinerten Schrott 50 zwischenzulagern. Zu diesem Zweck weist der Pufferspeicher 52 eine oder mehrere Kammern 54 auf, in dem der Schrott 50 zwischengelagert werden kann. Weiterhin ist der Pufferspeicher 52 dazu eingerichtet, den Schrott 50 der Sortieranlage 48 mit einem vorgegebenen Volumenstrom 56 zuzuführen. Alternativ kann der Pufferspeicher 52 auch dazu eingerichtet sein, den Schrott 50 der Sortieranlage 48 mit einem vorgegebenen Massenstrom 56 zuzuführen. Zu diesem Zweck weist der Pufferspeicher 52 eine Entnahmevorrichtung 58 auf, mit der der Kammer 54 Schrott mit einem vorgegebenen Volumen- bzw. Massenstrom entnommen werden kann, um diesen an die Sortieranlage weiterzuleiten. Vorzugsweise erfolgt die Steuerung der Entnahmevorrichtung 58 automatisch, insbesondere über eine dazu vorgesehene Steuerungseinrichtung 60, so dass der Volumen- bzw. Massenstrom 56 auf den vorgegebenen Wert eingeregelt werden kann.

Der Pufferspeicher 52 dient demnach als Puffer, um dem typischerweise ungleichmäßigen Volumen- bzw. Massenstrom des von der Zerkleinerungsanlage 44 zerkleinerten Schrotts 50 in einen vorgegebenen Volumen- bzw. Massenstrom 56 umzuwandeln, so dass ein effektiverer Betrieb der nachgeordneten Sortieranlage 48 ermöglicht wird.

Zu diesem Zweck ist die Kapazität der einen oder mehreren Kammern 54 so bemessen, dass im Pufferspeicher 52 zerkleinerter Schrott 50 in einer Menge gelagert werden kann, um die nachgelagerte Sortieranlage 48 bei gefülltem Pufferspeicher 52 für mindestens 10 h weiter betreiben zu können, auch wenn von der Zerkleinerungsanlage 44 kein weiterer zerkleinerter Schrott 50 nachgeliefert wird. Auf diese Weise kann eine Wartung oder ein zeitweiser Ausfall der Zerkleinerungsanlage 44 kompensiert werden, ohne den Betrieb der Recyclinganlage 42 unterbrechen zu müssen.

Der Sortieranlage 48 sind zwei Anlagen für den Heißbetrieb nachgeordnet, nämlich eine Entlackungsanlage 62 und ein Schmelzofen 64. In der Entlackungsanlage 62 wird der von der Sortieranlage 48 sortierte Schrott 66 entlackt, indem die Schrottfragmente für eine vorgegebene Zeitdauer durch einen heißen Luftstrom mit einer Temperatur von z.B. 400 °C transportiert werden. Durch die hohen Temperaturen in der Entlackungsanlage 62 werden Lackschichten von den UBC-Schrottfragmenten verdampft. Der auf diese Weise entlackte Schrott 68 kann dann dem Schmelzofen 64 zugeführt und eingeschmolzen werden.

Zwischen der Sortieranlage 48 und der Entlackungsanlage 62 ist ein zweiter Pufferspeicher 70 angeordnet. Der Pufferspeicher 70 ist dazu eingerichtet, den von der Sortieranlage 48 sortierten Schrott 66 zwischenzulagern. Zu diesem Zweck weist der Pufferspeicher 70 eine oder mehrere Kammern 72 auf, in denen der Schrott 66 zwischengelagert werden kann. Weiterhin ist der Pufferspeicher 70 dazu eingerichtet, den Schrott 66 der nachfolgenden Entlackungsanlage 62 mit einem vorgegebenen Volumenstrom 74 zuzuführen. Alternativ kann der Pufferspeicher 70 auch dazu eingerichtet, den Schrott 66 der nachfolgenden Entlackungsanlage 62 mit einem vorgegebenen Massenstrom 74 zuzuführen. Zu diesem Zweck weist der Pufferspeicher 70 eine Entnahmevorrichtung 76 auf, mit der der Kammer 72 Schrott mit einem vorgegebenen Volumen- bzw. Massenstrom entnommen werden kann, um diesen an die Entlackungsanlage 62 weiterzuleiten. Vorzugsweise erfolgt die Steuerung der Entnahmevorrichtung 76 automatisch, insbesondere über die Steuerungseinrichtung 60, so dass der Volumen- bzw. Massenstrom 74 auf den vorgegebenen Wert eingeregelt werden kann.

Der zweite Pufferspeicher 70 dient demnach als Puffer, um dem typischerweise ungleichmäßigen Volumen- bzw. Massenstrom des von der Sortieranlage 48 sortierten Schrotts 66 in einen vorgegebenen Volumen- bzw. Massenstrom 74 umzuwandeln, so dass ein effektiverer und insbesondere kontinuierlicher Betrieb der nachgeordneten Anlagen 62, 64 im Heißbetrieb möglich ist. Es wurde festgestellt, dass selbst ein gleichmäßiger Volumen- bzw. Massenstrom 56 zur Sortieranlage 48 häufig einen ungleichmäßigen Volumen- bzw. Massenstrom des sortieren Schrotts 66 von der Sortieranlage 48 liefert, da der zum Teil stark schwankende Verunreinigungsgrad des zu sortierenden Schrotts 56 dazu führt, dass ein schwankender Anteil des Schrotts von der Sortieranlage 48 aussortiert wird.

Die Kapazität der einen oder mehreren Kammern 72 ist vorzugsweise so bemessen, dass im zweiten Pufferspeicher 70 sortierter Schrott 50 in einer Menge gelagert werden kann, um die nachgelagerten Anlagen 62, 64 im Heißbetrieb bei gefülltem Pufferspeicher 70 für mindestens 10 h weiter betreiben zu können, auch wenn von der Sortieranlage 48 kein weiterer sortierter Schrott 66 nachgeliefert wird. Auf diese Weise kann eine Wartung oder ein zeitweiser Ausfall der Sortieranlage 48 kompensiert werden, ohne den Betrieb der Recyclinganlage 42 unterbrechen zu müssen.

Durch das Vorsehen des ersten und zweiten Pufferspeichers 52, 70 wird damit ein effektiverer und störungsärmerer Betrieb der Recyclinganlage 42 ermöglicht als bei der Recyclinganlage 20 aus dem Stand der Technik.

Die beiden Pufferspeicher 52, 70 ermöglichen zudem einen flexibleren Betrieb der einzelnen Anlagen der Recyclinganlage 42. So können beispielsweise die Zerkleinerungsanlage 44 mit hohen Durchsätzen im Einschichtbetrieb (8h/Tag), die Sortieranlage 56 im Zweischichtbetrieb (16h/Tag) und die Anlagen 62, 64 im Heißbetrieb mit gleichmäßigem Volumen- bzw. Massenstrom 74 durchgehend im Dreischichtbetrieb (24h/Tag) betrieben werden. Dadurch können ein Abkühlen und Wiederaufheizen der Anlagen im Heißbetrieb 62, 64 vermieden werden, ohne dass es erforderlich ist, die gesamte Recyclinganlage im personalintensiven Dreischichtbetrieb zu betreiben. Weiterhin erlauben die Schichtunterbrechungen bei der Zerkleinerungsanlage 44 und der Sortieranlage 48 eine Wartung während des laufenden Betriebs der Recyclinganlage 42.

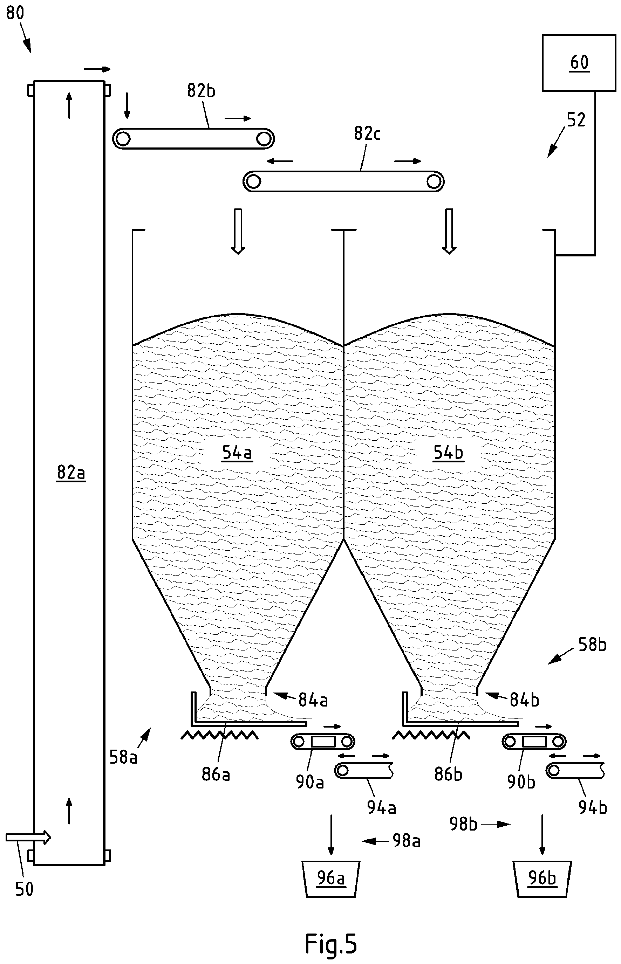

Fig. 5 zeigt den ersten Pufferspeicher 52 der Recyclinganlage 42 aus Fig. 4. Der Pufferspeicher 52 ist mehrzellig ausgebildet mit einem ersten Silo als erste Kammer 54a und einem zweiten Silo als zweite Kammer 54b. Der Pufferspeicher 52 weist eine Zuführungseinrichtung 80 mit mehreren Förderbändern 82a-c auf, mit denen der von der Zerkleinerungsanlage 44 zerkleinerte Schrott 50 von oben in die Silos 54a-b eingefüllt werden kann. Das Förderband 82c ist reversierbar, so dass der Schrott 50 wahlweise dem ersten oder dem zweiten Silo 54a-b zugeführt werden kann.

Im unteren Bereich der beiden Silos 54a-b ist jeweils eine Entnahmevorrichtung 58ab angeordnet. Jede Entnahmevorrichtung 58a-b umfasst einen unterhalb der jeweiligen Siloöffnung 84a-b angeordneten ansteuerbaren Vibrationsförderer 86a-b sowie eine Bandwaage 90a-b. Ist der Vibrationsförderer 86a bzw. 86b in Ruhe, so staut sich der Schrott auf dem Vibrationsförderer vor der Siloöffnung. Wird der Vibrationsförderer 86a bzw. 86b aktiviert, so führen die Vibrationen des Vibrationsförderer 86a bzw. 86b dazu, dass der Schrott zur Bandwaage 90a-b transportiert wird. Dadurch wird auch der Bereich unter der Siloöffnung frei, so dass Schrott aus dem Silo nachrutschen kann.

Um einen vorgegebenen Volumen- bzw. Massenstrom aus einem der Silos 54a-b auslassen zu können, wird der jeweilige Vibrationsförderer 86a bzw. 86b abhängig von dem Wägeergebnis der jeweiligen Bandwaage 90a-b gesteuert, beispielsweise über die Steuerungseinrichtung 60 der Recyclinganlage 42. Durch die Ansteuerung der Vibrationsförderer 86a-b über die Steuerungseinrichtung 60 kann damit Schrott mit einem vorgegebenen Volumen- bzw. Massenstrom wahlweise aus dem ersten oder dem zweiten Silo 54a-b oder auch aus beiden Silos gleichzeitig ausgelassen werden.

An die Bandwaagen 90a-b schließen jeweils Förderbänder 94a-b an, mit denen der aus den Silos 54a-b ausgelassene Schrott 56 zur Sortieranlage gefördert werden kann.

Jedes der beiden Silos 54a-b weist eine Kapazität von 250 m$^3$ auf, so dass der erste Pufferspeicher 52 eine Gesamtkapazität von 500 m³ aufweist. Dies entspricht bei einer durchschnittlichen Dichte des zerkleinerten UBC-Schrotts von 200 kg/m³ einem Fassungsvermögen von insgesamt 100 t. Auf diese Weise kann die nachfolgende Sortieranlage 48 bei gefülltem ersten Pufferspeicher 52 auch ohne Nachschub von der Zerkleinerungsanlage noch für 10 h mit dem Maximaldurchsatz von 10 t/h betrieben werden.

Mit den Förderbändern 94a-b kann dem ersten oder dem zweiten Silo 54a-b entnommener Schrott alternativ auch aus der Recyclinganlage 42 bzw. dem Recyclingprozess herausgeführt werden, beispielsweise wenn der Schrott übermäßig verunreinigt ist. Zu diesem Zweck sind die Förderbänder 94a-b reversierbar, so dass der mit der jeweiligen Entnahmevorrichtung 84a bzw. 84b auch zu einem jeweiligen Container 96a bzw. 96b geführt werden kann. Durch die in beide Drehrichtungen antreibbaren Förderbänder 94a-b und die Container 96a-b werden also zwei Notauslasse 98a-b zur Verfügung gestellt, um Schrott bei Bedarf aus dem ersten oder zweiten Silo 54a-b aus dem Recyclingprozess herausnehmen zu können.

Der zweite Pufferspeicher 70 kann im Prinzip baugleich wie der erste Pufferspeicher 52 ausgebildet werden mit zwei als Silos ausgebildeten Kammern 72a und 72b.

Zusammengefasst wird durch den ersten bzw. den zweiten Pufferspeicher eine prozesstechnische Entkopplung von Zerkleinerung, Sortierung und metallurgischer Verwertung (insb. Entlackung und Einschmelzen) erreicht. Die in Reihe geschalteten Anlagen der Recyclinganlage werden also zeitlich voneinander entkoppelt, so dass die einzelnen Hauptprozessschritte (Zerkleinern, Sortieren, Entlacken/Einschmelzen) unabhängig vom jeden vor- und/oder nachgeschalteten Prozess betrieben werden können. Auf diese Weise wird die Störanfälligkeit der Recyclinganlage reduziert.

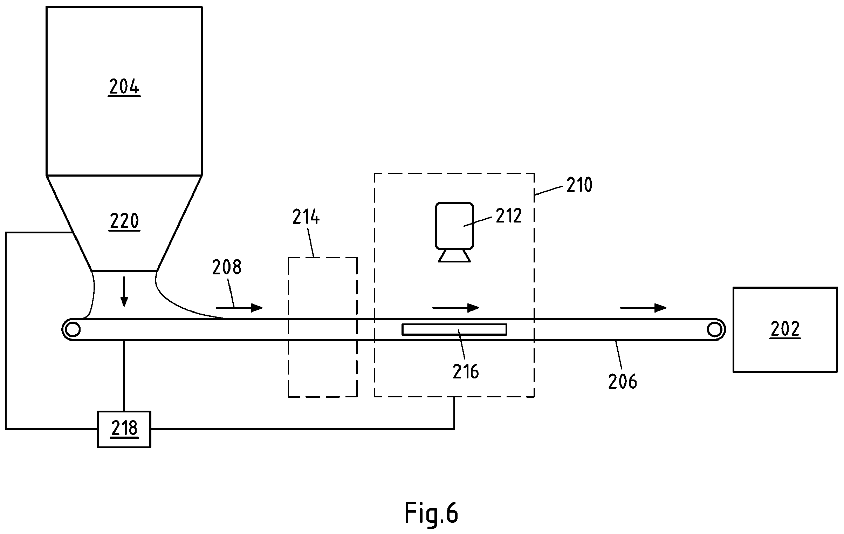

Fig. 6 zeigt ein Ausführungsbeispiel des Verfahrens und der Anlage gemäß dem zweiten Aspekt der vorliegenden Offenbarung.

Die Anlage 200 zur Aufbereitung von Aluminiumschrott umfasst eine Verarbeitungsstation 202 zur Aufbereitung von Aluminiumschrott. Bei der Verarbeitungsstation 202 kann es sich beispielsweise um die Sortieranlage 48 oder um die Entlackungsanlage 62 bzw. den Schmelzofen 64 aus Fig. 4 handeln.

Weiterhin umfasst die Anlage 200 eine Bereitstellungsstation 204, die zur Bereitstellung von Schrottfragmenten eingerichtet ist. Bei der Bereitstellungsstation 204 kann es sich beispielsweise um den ersten Pufferspeicher 52 oder um den zweiten Pufferspeicher 70 aus Fig. 4 handeln.

Die Anlage 200 umfasst weiterhin eine Fördereinrichtung 206, die in Fig. 6 beispielhaft als Transportband ausgebildet ist. Mit der Fördereinrichtung 206 werden von der Bereitstellungstation bereitgestellte Schrottfragmente als Strom 208 zur Verarbeitungsstation 202 transportiert und dieser zugeführt.

Darüber hinaus weist die Anlage 200 noch eine Durchsatzmesseinrichtung 210 auf, die dazu eingerichtet ist, an dem Strom 208 von Schrottfragmenten einen Wert für den Durchsatz des Stroms 208 zu messen. Beispielsweise kann die Durchsatzmesseinrichtung 210 ein Kamerasystem 212 aufweisen, das die Anzahl der Schrottfragmente pro Zeiteinheit oder die von den Schrottfragmenten auf dem Transportband 206 belegte Fläche ermittelt. Vorzugsweise ist zu diesem Zweck eine Vereinzelungseinrichtung 214 vorgesehen, die die Schrottfragmente auf dem Transportband 206 zuvor vereinzelt.

Alternativ zu einem Kamerasystem 212 kann auch eine Bandwaage 216 vorgesehen werden, um einen Wert für den Massenstrom zu bestimmen. Weiterhin kann auch eine Vorrichtung zur Lasertriangulation (nicht dargestellt) vorgesehen sein, um einen Wert für den Volumenstrom des Stroms 208 zu bestimmen. Bei Verwendung einer Bandwaage oder einer Lasertriangulationsvorrichtung ist eine vorige Vereinzelung der Schrottfragmente nicht notwendig.

Zudem können auch verschiedene Durchsatzmesseinrichtungen miteinander kombiniert werden, beispielsweise eine Bandwaage 216 zur Bestimmung eines Werts für den Massenstrom und ein Kamerasystem 212 zur Bestimmung des Werts für die Stückzahl.

Der von der Durchsatzmesseinrichtung 210 bestimmte Wert für den Durchsatz wird in einer vorgesehenen Steuerungseinrichtung 218 mit einem vorgegebenen Wert für den Durchsatz verglichen. Beispielsweise kann die Steuerungseinrichtung 218 bestimmen, ob der gemessene Wert für den Durchsatz einen vorgegebenen oberen Grenzwert überschreitet oder einen vorgegebenen unteren Grenzwert unterschreitet.

Abhängig vom Ergebnis des Vergleichs steuert die Steuerungseinrichtung 218 dann die Fördereinrichtung 206 und/oder die Bereitstellungsstation 204 an. Beispielsweise kann die Steuerungseinrichtung 218 eine Entnahmevorrichtung 220 der Bereitstellungseinrichtung 204 und die Fördereinrichtung 206 derart ansteuern, dass die Entnahmerate der Entnahmevorrichtung 220 und die Transportgeschwindigkeit des Transportbands 206 erhöht (erniedrigt) wird, wenn der gemessene Wert für den Durchsatz zu niedrig (zu hoch) ist.

Im Folgenden wird ein Beispiel für eine mögliche Regelung des Durchsatzes durch die Steuerungseinrichtung 218 beschrieben:

In der Steuerungseinrichtung 218 wird ein Durchsatzfenster mit einem unteren Grenzwert von 200 Stück/Sekunde (Stückrate) und einem ersten oberen Grenzwert von 240 Stück/Sekunde eingestellt. Dieses Durchsatzfenster kann zum Beispiel der optimale Betriebspunkt eines Röntgensortierers sein, der im vorliegenden Beispiel die Verarbeitungsstation 202 darstellt. Weiterhin wird in der Steuerungseinrichtung noch ein zweiter oberer Grenzwert von 260 Stück/Sekunde eingestellt, bei dem der Röntgensortierer 202 überlastet wird.

Die Bereitstellungsstation 204, zum Beispiel ein Silo oder eine Silogruppe, werden auf eine anfängliche Austragsleistung von beispielsweise 10 t/Stunde eingestellt. Die Regelung durch die Steuerungseinrichtung 218 kann beispielsweise nach Ablauf einer vorgegebenen Zeitdauer, z.B. 180 s, nach dem Anfahren des Röntgensortierers 202 beginnen.

Wenn die Steuerungseinrichtung 218 feststellt, dass der von der Durchsatzmesseinrichtung 210 gemessene Wert für den Durchsatz für mehr als z.B. 10 s unter dem unteren Grenzwert liegt, steuert die Steuerungseinrichtung 218 die Entnahmevorrichtung 220 so an, dass die Austragsleistung zum Beispiel um 0,1 t/Stunde erhöht wird. Sollte nach 90 Sekunden (Zeit vom Siloaustrag bis zur Durchsatzmesseinrichtung 210) der Durchsatz weiter unter dem ersten Grenzwert liegen, wird die Ausgangsleistung erneut erhöht, zum Beispiel wieder um 0,1 t/Stunde.

Wenn die Steuerungseinrichtung 218 feststellt, dass der von der Durchsatzmesseinrichtung 210 gemessene Wert für den Durchsatz für mehr als z.B. 10 s über dem ersten und unter dem zweiten oberen Grenzwert liegt, so steuert die Steuerungseinrichtung 218 die Entnahmevorrichtung 220 so an, dass die Austragsleistung zum Beispiel um 0,25 t/Stunde reduziert wird. Sollte nach 90 Sekunden (Zeit vom Siloaustrag bis zur Durchsatzmesseinrichtung 210) der Durchsatz weiter im Bereich zwischen dem ersten und zweiten oberen Grenzwert liegen, wird die Ausgangsleistung erneut reduziert, zum Beispiel wieder um 0,25 t/Stunde.

Wenn die Steuerungseinrichtung 218 feststellt, dass der von der Durchsatzmesseinrichtung 210 gemessene Wert für den Durchsatz über dem zweiten oberen Grenzwert liegt, steuert die Steuerungseinrichtung 218 die Entnahmevorrichtung 220 so an, dass die Austragsleistung sofort reduziert wird, beispielsweise um 0,5 t/h, um eine Überlastung des Röntgensortierers 202 zu vermeiden. Sollte nach 90 Sekunden (Zeit vom Siloaustrag bis zur Durchsatzmesseinrichtung 210) der Durchsatz weiter oberhalb des zweiten oberen Grenzwerts liegen, wird die Ausgangsleistung erneut reduziert, zum Beispiel wieder um 0,5 t/Stunde.

**Patentansprüche**

1. Recyclinganlage (42) zur Aufbereitung von Aluminiumschrott, insbesondere UBC-Schrott,

   - mit einer Zerkleinerungsanlage (44), die dazu eingerichtet ist, der Recyclinganlage (22) zugeführten Schrott zu zerkleinern, und
   - mit einer der Zerkleinerungsanlage (44) nachgeordneten Sortieranlage (48), die dazu eingerichtet ist, den von der Zerkleinerungsanlage (44) zerkleinerten Schrott zu sortieren,

   **dadurch gekennzeichnet,**
   - **dass** die Recyclinganlage (42) einen ersten Pufferspeicher (52) aufweist, der dazu eingerichtet ist, den von der Zerkleinerungsanlage (44) zerkleinerten Schrott zwischenzulagern und der Sortieranlage (48) mit einem vorgegebenen Massen- oder Volumenstrom (56) zuzuführen.

2. Recyclinganlage nach Anspruch 1, **dadurch gekennzeichnet, dass** der Sortieranlage (48) mindestens eine weitere Anlage (62, 64) nachgeordnet ist, die zur Weiterverarbeitung des sortierten Schrotts eingerichtet ist, und dass die Recyclinganlage (42) einen zweiten Pufferspeicher (70) aufweist, der dazu eingerichtet ist, den von der Sortieranlage (48) sortierten Schrott zwischenzulagern und der weiteren Anlage (62, 64) mit einem vorgegebenen Massen- oder Volumenstrom (74) zuzuführen.

3. Recyclinganlage nach Anspruch 2, **dadurch gekennzeichnet, dass** die mindestens eine weitere Anlage (62,64), die der Sortieranlage (48) nachgeordnet ist, eine Anlage für den Heißbetrieb ist.

4. Recyclinganlage nach Anspruch 2 oder 3, **dadurch gekennzeichnet, dass** der Sortieranlage (48) eine Entlackungsanlage (62) nachgeordnet ist, die dazu eingerichtet ist, den von der Sortieranlage (48) sortierten Schrott zu entlacken.

5. Recyclinganlage nach einem der Ansprüche 2 bis 4, **dadurch gekennzeichnet, dass** der Sortieranlage (48) bzw. einer etwaig vorhandenen Entlackungsanlage (62) ein Schmelzofen (64) nachgeordnet ist, der dazu eingerichtet ist, den sortierten bzw. entlackten Schrott einzuschmelzen.

6. Recyclinganlage nach einem der Ansprüche 1 bis 5, **dadurch gekennzeichnet, dass** die Kapazität des ersten und/oder zweiten Pufferspeichers (52, 70) so bemessen ist, dass aus einem gefüllten Pufferspeicher (52, 70) die jeweils nachfolgende Anlage (48, 62, 64) für mindestens 2 h, vorzugsweise mindestens 5 h, weiter bevorzugt mindestens 10 h versorgt werden kann, wenn diese nachfolgende Anlage (48, 62, 64) mit Maximaldurchsatz betrieben wird.

7. Recyclinganlage nach einem der Ansprüche 1 bis 6, **dadurch gekennzeichnet, dass** der erste Pufferspeicher (52) mehrzellig mit mindestens einer ersten und einer zweiten Kammer (54a-b) ausgebildet ist und dass der erste Pufferspeicher (52) dazu eingerichtet ist, der Sortieranlage (48) Schrott wahlweise aus der ersten Kammer (54a) oder aus der zweiten Kammer (54b) oder optional eine Schrottmischung aus beiden Kammern (54a-b) zuzuführen.

**8.** Recyclinganlage nach einem der Ansprüche 2 bis 7, **dadurch gekennzeichnet, dass** der zweite Pufferspeicher (70) mehrzellig mit mindestens einer ersten und einer zweiten Kammer (72a-b) ausgebildet ist und dass der zweite Pufferspeicher (70) dazu eingerichtet ist, der nachfolgenden Anlage (62, 64) Schrott wahlweise aus der ersten Kammer (72a) oder aus der zweiten Kammer (72b) oder optional eine Schrottmischung aus beiden Kammern (72a-b) zuzuführen.

**9.** Recyclinganlage nach Anspruch 7 oder 8, **dadurch gekennzeichnet, dass** der erste oder der zweite Pufferspeicher (52, 70) einen Notauslass (98a-b) aufweist, der dazu eingerichtet ist, wahlweise der ersten oder der zweiten Kammer (54a-b, 72a-b) Schrott zu entnehmen, um diesen gesondert aus der Recyclinganlage (42) heraus zu führen.

**10.** Recyclinganlage nach einem der Ansprüche 1 bis 9, **dadurch gekennzeichnet, dass** der erste oder der zweite Pufferspeicher (52, 70) mindestens ein Silo (54a-b, 72a-b) zur Zwischenlagerung des Schrotts umfasst, wobei das Silo (54a-b, 72a-b) eine geregelte Entnahmevorrichtung (58a-b) aufweist, die dazu eingerichtet ist, Schrott mit einem vorgegebenen Massen- oder Volumenstrom aus dem Silo (54a-b, 72a-b) auszulassen, um den Schrott der nachfolgenden Anlage (48, 62, 64) zuzuführen.

**11.** Recyclinganlage nach einem der Ansprüche 1 bis 10, **dadurch gekennzeichnet, dass** die Recyclinganlage (42) eine Steuerungseinrichtung (60) zur Steuerung der Recyclinganlage (42) aufweist, die dazu eingerichtet ist, die Recyclinganlage (42) entsprechend einem Recyclingverfahren nach einem der Ansprüche 12 oder 13 zu steuern.

**12.** Recyclingverfahren zur Aufbereitung von Aluminiumschrott, insbesondere UBC-Schrott, insbesondere unter Verwendung einer Recyclinganlage (42) nach einem der Ansprüche 1 bis 11,

    - bei dem eine Menge Aluminiumschrott, insbesondere UBC-Schrott, zerkleinert wird,
    - bei dem der zerkleinerte Aluminiumschrott in einem ersten Pufferspeicher (52) zwischengelagert wird und
    - bei dem der Aluminiumschrott dem Pufferspeicher (52) automatisch mit einem vorgegebenen Massen- oder Volumenstrom (56) entnommen und sortiert wird.

**13.** Recyclingverfahren nach Anspruch 12, **dadurch gekennzeichnet, dass** der sortierte Aluminiumschrott in einem zweiten Pufferspeicher (70) zwischengelagert wird und dass der Aluminiumschrott dem zweiten Pufferspeicher (70) automatisch mit einem vorgegebenen Massen- oder Volumenstrom (74) entnommen und weiterverarbeitet, insbesondere entlackt und/oder eingeschmolzen wird.

Fig.2

Fig.1

20

```
┌─────────────────────┐
│     Zerkleinern      │
│  (Zerkleinerungs-    │── 22
│       anlage)        │
└─────────────────────┘
          ⇩
┌─────────────────────┐
│     Sortieren        │
│   (Sortieranlage)    │── 24
│                      │
└─────────────────────┘
          ⇩
┌─────────────────────┐
│      Entlacken       │
│   (Entlackungs-      │── 26
│       anlage)        │
└─────────────────────┘
          ⇩
┌─────────────────────┐
│    Einschmelzen      │
│   (Schmelzofen)      │── 28
│                      │
└─────────────────────┘
```

# Fig.3
(Stand der Technik)

42

46

Zerkleinern
(Zerkleinerungsanlage)

44

50

54

58

52

56

Sortieren
(Sortieranlage)

48

60

66

72

76

70

Entlacken
(Entlackungsanlage)

62

74

68

Einschmelzen
(Schmelzofen)

64

Fig.4

Fig.5

Fig.6

Europäisches Patentamt
European Patent Office
Office européen des brevets

# EUROPÄISCHER RECHERCHENBERICHT

Nummer der Anmeldung

EP 17 16 9088

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2006/255190 A1 (ARSENEAULT EMILE [CA] ET AL) 16. November 2006 (2006-11-16) | 1-6,12, 13 | INV. B07B1/00 |
| A | * Absätze [0015], [0016], [0018]; Anspruch 1 * | 7-11 | B07C1/00 B03B9/06 |
| | ----- | | B09B3/00 |
| Y | US 4 337 900 A (WILLIAMS ROBERT M ET AL) 6. Juli 1982 (1982-07-06) | 1-6,12, 13 | B09B5/00 C22B7/00 |
| A | * Anspruch 1 * | 7-11 | C22B21/00 |
| | ----- | | |
| Y | DE 195 19 475 A1 (MANN & HUMMEL FILTER [DE]) 28. November 1996 (1996-11-28) | 1-6,12, 13 | |
| A | * Spalte 3; Anspruch 1 * | 7-11 | |
| | ----- | | |
| Y | US 4 463 844 A (HUFFMAN STANLEY S [US] ET AL) 7. August 1984 (1984-08-07) | 1-6,12, 13 | |
| A | * das ganze Dokument * | 7-11 | |
| | ----- | | |
| Y | WO 2011/032696 A1 (RIEGERT WOLFGANG [DE]; RIEGERT KLAUS [DE]) 24. März 2011 (2011-03-24) | 1-6,12, 13 | |
| A | * das ganze Dokument * | 7-11 | **RECHERCHIERTE SACHGEBIETE (IPC)** |
| | ----- | | B07B B07C B03B B09B C22B |

Der vorliegende Recherchenbericht wurde für alle Patentansprüche erstellt

| Recherchenort | Abschlußdatum der Recherche | Prüfer |
|---|---|---|
| München | 15. September 2017 | Devilers, Erick |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 17 16 9088

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-09-2017

| Im Recherchenbericht angeführtes Patentdokument | Datum der Veröffentlichung | Mitglied(er) der Patentfamilie | Datum der Veröffentlichung |
|---|---|---|---|
| US 2006255190 A1 | 16-11-2006 | CA 2506718 A1<br>US 2006255190 A1<br>US 2007114309 A1 | 23-01-2006<br>16-11-2006<br>24-05-2007 |
| US 4337900 A | 06-07-1982 | KEINE | |
| DE 19519475 A1 | 28-11-1996 | AT 181271 T<br>BR 9601735 A<br>DE 19519475 A1<br>EP 0745454 A1<br>ES 2135810 T3<br>US 5759231 A | 15-07-1999<br>31-03-1998<br>28-11-1996<br>04-12-1996<br>01-11-1999<br>02-06-1998 |
| US 4463844 A | 07-08-1984 | AU 9180782 A<br>CA 1189493 A<br>EP 0082735 A2<br>US 4463844 A | 30-06-1983<br>25-06-1985<br>29-06-1983<br>07-08-1984 |
| WO 2011032696 A1 | 24-03-2011 | DE 102009041789 A1<br>WO 2011032696 A1 | 31-03-2011<br>24-03-2011 |

EPO FORM P0461

Für nähere Einzelheiten zu diesem Anhang : siehe Amtsblatt des Europäischen Patentamts, Nr.12/82